# EUROPÄISCHE PATENTANMELDUNG

(11) **EP 2 184 655 A1**
(43) Veröffentlichungstag der Anmeldung: **12.05.2010**
(21) Anmeldenummer: 09013897.5
(22) Anmeldetag: 05.11.2009
(51) Int. Cl.: G05B 19/042, G05B 19/10

(54) **Bedienungseinheit mit Navigationstasten**

(30) Priorität: 05.11.2008 DE 102008055998
(71) Anmelder: WILO SE, 44263 Dortmund (DE)
(72) Erfinder: Kettner, Thorsten, 45711 Datteln (DE)
(74) Vertreter: COHAUSZ DAWIDOWICZ HANNIG & SOZIEN

(57) **Zusammenfassung**

Die Erfindung betrifft eine Bedienungseinheit (1) zur Bedienung einer Steuerung eines Gerätes, einer Anlage und/ oder Prozesses in der Gebäudeautomation, mit einem Display (2), einer Bedienanordnung (3) umfassend mindestens vier Bedienelemente (4a, 4b, 5a, 5b), einem Speicher, in dem ein parametrierbares Steuerprogramm gespeichert ist, und einem Mikroprozessor zur Ausführung des Steuerprogramms. Das Steuerprogramm weist zumindest ein Menü auf, in welchem dem Steuerprogramm mittels der Bedienelemente (4a, 4b, 5a, 5b) ein auf dem Display (2) dargestellter Wert (6b, 7b) für einen Betriebsparameter (6a, 7a) vorgebbar ist. In dem Menü sind erfindungsgemäß mindestens zwei Betriebsparameter (6a, 7a) einstellbar, deren aktuelle Werte (6b, 7b) auf der Bedienungseinheit (1) gleichzeitig dargestellt sind, wobei jedem Parameter (6a, 7a) ein Bedienelementpaar ((4a, 4b); (5a, 5b)) zugeordnet ist. Mittels des einen Bedienelements (4a) des ersten Bedienelementpaares (4a, 4b) kann der Wert (6b) des ersten Betriebsparameters (6a) in eine erste Richtung und mittels des anderen Bedienelements (4b) des ersten Bedienelementpaares (4a, 4b) in die entgegengesetzte Richtung verändert werden. Weiterhin kann mittels des einen Bedienelements (5a) des zweiten Bedienelementpaares (5a, 5b) der Wert (7b) des zweiten Betriebsparameters (7a) in eine erste Richtung und mittels des anderen Bedienelements (5b) des zweiten Bedienelementpaares (5a, 5b) in die entgegengesetzte Richtung verändert werden, wobei der erste Betriebsparameter (6a) eine Temperaturangabe und der zweite Betriebsparameter (7a) eine Zeitangabe ist, und dem ersten Bedienelementpaar (4a, 4b) die Richtungen "hoch" und "runter" und dem zweiten Bedienelementpaar (5a, 5b) die Richtungen "rechts" und "links" zugeordnet sind.

## Beschreibung

Die vorliegende Erfindung betrifft eine Bedienungseinheit zur Bedienung einer Steuerung eines Gerätes, einer Anlage und/ oder Prozesses in der Gebäudeautomation, mit einem Display, einer Bedienanordnung umfassend mindestens vier Bedienelemente, einem Speicher, in dem ein parametrierbares Steuerprogramm gespeichert ist, und einem Mikroprozessor zur Ausführung des Steuerprogramms, wobei das Steuerprogramm zumindest ein Menü aufweist, in welchem dem Steuerprogramm mittels der Bedienelemente ein auf dem Display dargestellter Wert für einen Betriebsparameter vorgebbar ist, und in dem Menü mindestens zwei Betriebsparameter einstellbar sind, deren aktuelle Werte auf der Bedienungseinheit gleichzeitig dargestellt sind, wobei jedem Parameter ein Bedienelementpaar zugeordnet ist, und wobei mittels des einen Bedienelements des ersten Bedienelementpaares der Wert des ersten Betriebsparameters in eine erste Richtung und mittels des anderen Bedienelements des ersten Bedienelementpaares in die entgegengesetzte Richtung verändert werden kann, und mittels des einen Bedienelements des zweiten Bedienelementpaares der Wert des zweiten Betriebsparameters in eine erste Richtung und mittels des anderen Bedienelements des zweiten Bedienelementpaares in die entgegengesetzte Richtung verändert werden kann.

Die Erfindung betrifft dabei insbesondere die Art und Weise, der Bedienungseinheit respektive dem Steuerprogramm Betriebsparameterwerte des Gerätes, der Anlage und/ oder des Prozesses seitens des Anwenders vorzugeben.

Programmsteuerungen eröffnen im Allgemeinen die Möglichkeit, bestimmte Betriebsparameter einzustellen und damit Gerätefunktionen, Anlageneinstellungen oder Prozessverhalten an einen speziellen Anwendungsfall, bestimmte Umgebungsverhältnisse oder individuelle Verhaltenswünsche anzupassen. Beispielsweise können für Geräte, Anlagen oder Prozesse häufig Betriebsparameterwerte für Leistungen, Temperaturen, Drehzahlen, Drücke oder Zeiträume vorgegeben werden. Derartige Betriebsparameter werden innerhalb einzelner, voneinander unabhängiger Menüs eingestellt, die in eine hierarchische Menüstruktur eingegliedert sind.

Beispielsweise umfasst die Menüstruktur ein Menü 'Einstellungen', welches Untermenüs zur Einstellung einzelner Betriebsparameter enthält. Diese Untermenüs liegen in der Regel auf derselben Ebene. Wird die Vorgabe eines ersten und eines zweiten Betriebsparameters gewünscht, sind jeweils nacheinander die Einstellungsmenüs für 'Betriebsparameter 1" und "Betriebsparameter 2" aufzurufen. Innerhalb dieser Menüs kann dann den Betriebsparametern ein gewünschter Wert vorgegeben werden. Ist eine Vorgabe für den einen Parameterwert erfolgt, muss in die nächst höhere Menüebene gewechselt werden, dort das nächste Einstellungsmenü ausgewählt und in dieses gewechselt werden. Dies ist benutzerunfreundlich, da zur Eingabe des zweiten Betriebsparameters drei zusätzliche Verfahrensschritte notwendig sind, deren Vornahme zusätzliche Zeit und Geduld erfordern. Das Eingabeverfahren ist unübersichtlich, da die einzustellenden bzw. eingestellten Parameter nur nacheinander auf dem Display angezeigt werden. Nachteilig ist ferner, dass in dem Fall, in dem der erste Parameter nochmalig verändert werden soll, die vorgenommenen drei Schritte erneut durchgeführt werden müssen.

Abhilfe schafft hier ein Raumbediengerät, wie es aus dem deutschen Gebrauchsmuster DE 83 08 545.9 bekannt ist. Es zeigt mehrere Betriebsparameter gleichzeitig an, die jeweils über entsprechende Bedienelemente verändert werden können. Die Zuordnung der Bedienelemente zu den Betriebsparametern erfolgt dadurch, dass die Bedienelemente unmittelbar neben, insbesondere unterhalb der Anzeige des entsprechenden Betriebsparameters angeordnet ist.

Es ist Aufgabe der vorliegenden Erfindung, eine verbesserte Bedienungseinheit zur Bedienung einer Steuerung eines Gerätes, einer Anlage und/ oder Prozesses zur Verfügung zu stellen, die eine intuitive, benutzerfreundliche, einfache, schnelle und übersichtliche Eingabe von Betriebsparametern des Gerätes, der Anlage und/ oder Prozesses ermöglicht.

Diese Aufgabe wird durch die Merkmale des Anspruchs 1 gelöst. Vorteilhafte Weiterbildungen sind in den Unteransprüchen genannt.

Erfindungsgemäß wird eine Bedienungseinheit zur Bedienung einer Steuerung eines Gerätes, einer Anlage und/ oder Prozesses für die Gebäudeautomation vorgeschlagen, mit einem Display, einer Bedienanordnung umfassend mindestens vier Bedienelemente, einem Speicher, in dem ein parametrierbares Steuerprogramm gespeichert ist, und mit einem Mikroprozessor zur Ausführung des Steuerprogramms, wobei das Steuerprogramm zumindest ein Menü aufweist, in welchem dem Steuerprogramm mittels der Bedienelemente ein auf dem Display dargestellter Wert für einen Betriebsparameter vorgebbar ist, in dem Menü mindestens zwei Betriebsparameter einstellbar sind, deren aktuelle Werte auf der Bedienungseinheit zeitgleich dargestellt sind, jedem Parameter ein Bedienelementpaar zugeordnet ist, wobei mittels des einen Bedienelements des ersten Bedienelementpaares der Wert des ersten Betriebsparameters in eine erste Richtung und mittels des anderen Bedienelements des ersten Bedienelementpaares in die entgegengesetzte Richtung verändert werden kann und mittels des einen Bedienelements des zweiten Bedienelementpaares der Wert des zweiten Betriebsparameters in eine erste Richtung und mittels des anderen Bedienelements des zweiten Bedienelementpaares in die entgegengesetzte Richtung verändert werden kann, und wobei der erste Betriebsparameter eine Temperaturangabe und der zweite Betriebparameter eine Zeitangabe ist, und dem ersten Bedienelementpaar die Richtungen "hoch" und "runter" und dem zweiten Bedienelementpaar die Richtungen "rechts" und "links" zugeordnet sind.

Der Kerngedanke der Erfindung liegt darin, auf einer Bedienungseinheit einen veränderbaren Temperaturwert und eine veränderbare Zeitangabe gleichzeitig anzuzeigen und mittels separater Bedienelemente intuitiv einstellbar zu erhalten. Es wird damit ein Direktzugriff auf zwei oder mehrere Betriebsparameter gleichzeitig ermöglicht. Daraus ergibt sich der Vorteil, dass diese Parameterwerte gleichzeitig verändert werden können, wobei gleichzeitig sowohl ein simultanes als auch ein nacheinander erfolgendes Verändern von Werten umfasst. Dies kann als "zweidimensionales Editieren" bezeichnet werden, wobei eine Editiermöglichkeit von zwei Parameterwerten ein "zweifaches Editieren" darstellt. Ein Wechseln in ein anderes Untermenü kann dadurch vermieden werden. Dies erspart Zeit und Aufwand. Der Anwender hat die editierbaren Betriebsparameter im Blick. Es ist lediglich eine einzige Anzeigendarstellung notwendig, um die Betriebsparameter darzustellen, womit der Programmieraufwand für die Anzeigendarstellung reduziert wird.

Erfindungsgemäß umfasst das Menü die einstellbaren Parameterwerte Temperatur und Zeit. Dadurch, dass neben dem ersten Parameterwert auch mindestens ein zweiter Parameterwert verändert werden kann, können drei Bedienschritte vermieden werden, nämlich das Wechseln auf die nächst höhere Bedienebene, die Auswahl des Untermenüs für das Einstellen des zweiten Parameters und das Wechseln in dieses Untermenü.

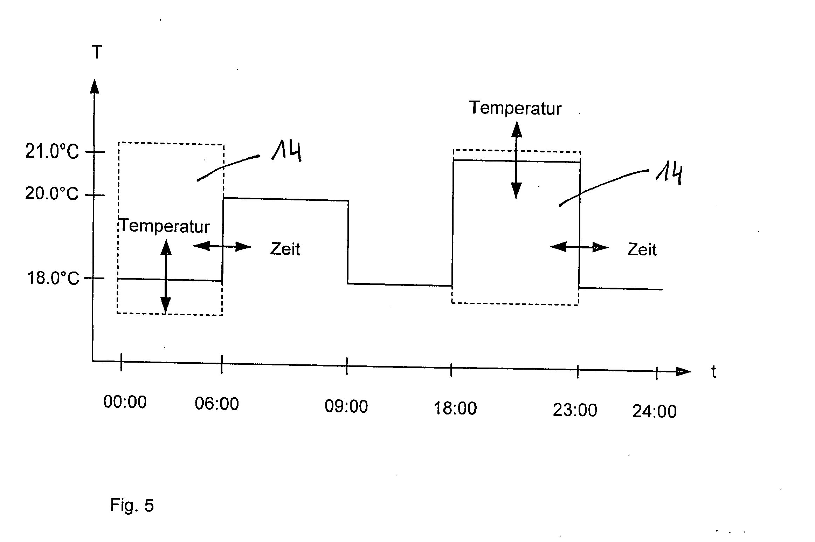

Dadurch dass, dem ersten Bedienelementpaar die Richtungen "hoch" und "runter" und dem zweiten Bedienelementpaar die Richtungen "rechts" und "links" zugeordnet sind, ergibt sich eine besonders intuitive Einstellung der Parameterwerte. Dies resultiert daraus, dass in einem Raumtemperatur- Zeit-Diagramm, vgl. Fig. 5, stets die Dimension Zeit auf der Abszisse und die Dimension Temperatur auf der Ordinate dargestellt ist, so dass die Einstellung einer Temperatur für einen bestimmten Zeitraum durch eine "Hoch/Runter-Bewegung" der in dem Diagramm dargestellten Temperaturkurve erzielt wird, wobei eine Veränderung eines Zeitpunktes, zu dem sich eine neue Temperatur einstellen soll, durch ein Verschieben nach links oder rechts der Temperaturkurve erreicht wird. Mit der genannten Zuordnung der Änderungsrichtungen der Parameterwerte ergibt sich ein aus psychologischer Sicht besonders einfaches, da selbsterklärendes, Bedienkonzept für die Parametereinstellung.

Da die Parameterwerte gleichzeitig dargestellt werden, ist man sich stets des Wertes des anderen Parameters bewusst, wenn der eine Parameterwert eingestellt wird. Das Eingabeverfahren ist dadurch besonders übersichtlich und einfach. Das Anzeigen der Parameterwerte kann auf einem einzigen Display, das in diesem Fall insbesondere als grafisches Display ausgebildet ist, oder jeweils auf einzelnen Displays, insbesondere Zeilendisplay erfolgen. Die Verwendung eines grafischen Displays hat den Vorteil, dass die Anordnung, Größe und Darstellung der Parameterwerte sowie etwaiger Zusatzelemente wie Symbole flexibel gewählt werden kann.

Es sei angemerkt, dass unter Steuerung eines Gerätes, einer Anlage und/ oder Prozesses im Sinne der Erfindung auch eine Regelung desselben bzw. derselben zu verstehen ist, für die die Betriebsparameter Temperatur und Zeit benötigt werden.

In einer Weiterbildung der Erfindung können auch mehr als zwei Parameterwerte gleichzeitig auf der Bedienungseinheit dargestellt und verändert werden. Beispielsweise können in dem Menü drei oder vier Betriebsparameter gleichzeitig eingestellt werden, deren aktuelle Werte auf der Bedienungseinheit zeitgleich dargestellt sind, wobei jedem Betriebsparameter ein Bedienelementpaar zugeordnet ist und jedes Bedienelementpaar ein erstes Bedienelement umfasst, mit dem der Wert des jeweiligen Betriebsparameters in eine erste Richtung verändert werden kann, und jedes Bedienelementpaar ein zweites Bedienelement umfasst, mit dem der Wert des jeweiligen Betriebsparameters in die entgegengesetzte Richtung verändert werden kann. Dies kann als dreifaches bzw. vierfaches Editieren innerhalb einer zweidimensionalen Editiermöglichkeit bezeichnet werden. Dadurch, dass drei oder sogar vier Parameterwerte gleichzeitig verändert werden können, ist es möglich, sechs bzw. neun Bedienschritte einzusparen, die durch das Wechseln in entsprechende Untermenüs notwendig wären, um dort den jeweiligen Parameter zu verändern.

Bei den weiteren Betriebsparametern kann es sich um beliebige physikalische Geräte-, Anlagen- oder Prozessparameter handeln, die für den Betrieb des Gerätes, der Anlage oder die Anwendung des Prozesses notwendig sind, beispielsweise für Zeiträume, Zeitpunkte, Temperaturen, Drücke, Leistungswerte, Drehzahlen oder Fördermengen. Die den Betriebsparametern zugewiesenen bzw. zuzuweisenden Werte können numerisch oder binär sein aber auch durch Textangaben einer Auswahl wie 'automatisch' 'manuell' oder 'off' gebildet sein.

Die Parameterwerte können auf der Bedienungseinheit durch Zahlenwerte dargestellt sein. Vorzugsweise kann ihnen jeweils die Dimension der sie repräsentierenden physikalischen Größe folgen, damit die Art des Parameters wie Zeit, Temperatur etc. unmittelbar ersichtlich ist. Alternativ können die Parameterwerte auch durch Textangaben wie 'automatisch', 'manuell', 'dynamisch', 'on/off' etc. dargestellt sein. Weiterhin können die Werte alternativ oder in Kombination durch grafische Symbole dargestellt sein, beispielsweise in Gestalt eines Balkens, eines Tortenstücks, eines Schiebebalkens oder einer bestimmten Anzahl identischer Grafikelemente wie zwei, drei, vier oder fünf Sterne. Die grafische Darstellung eines Parameterwerts hat den Vorteil, dass mit der Wiedergabe seines aktuellen Werts gleichzeitig die Einstellgrenzen für den Parameter wiedergegebenen werden können.

Erfindungsgemäß sind alle Bedienelemente als Richtungstasten ausgebildet. Dies hat den Vorteil, dass jedem Bedienelement eine spezifische Richtung zugeordnet ist, in die ein Parameterwert verändert werden kann. Insbesondere können sich die ein Bedienelementpaar bildenden Bedienelemente gegenüberliegen, so dass unmittelbar erkennbar ist, welches Bedienelement eine bestimmte Richtungsänderung eines bestimmten Parameterwertes herbeizuführen vermag. Die Bedienung der Bedienungseinheit wird dadurch besonders einfach und intuitiv.

Vorzugsweise können alle Bedienelemente in einem gemeinsamen NavigationsBedienteil zusammengefasst sein, wobei sie insbesondere jeweils benachbart zueinander angeordnet sind, so dass jedes Bedienelement zur rechten und zur linken Seite jeweils einen Nachbarn hat. Bei vier Bedienelementen für die Änderung von zwei Betriebsparametern ergeben sich demgemäß vier Richtungen, die durch oben, unten, rechts und links definiert sind. Bei acht Bedienelementen für die Änderung von vier Betriebsparametern ergeben sich acht Richtungen, wobei zu den oben genannten Richtungen noch solche hinzukommen, die als Nordost, Südost, Südwest und Nordwest bezeichnet werden können. Aufgrund des richtungshinweisenden Charakters der Bedienelemente stellen diese Navigationstasten dar.

Vorzugsweise kann jedem Parameterwert ein Symbolpaar mit zwei Symbolen zugeordnet sein, die auf der Bedienungseinheit respektive dem Display neben dem Parameterwert angezeigt sind, wobei das Symbolpaar ebenfalls einem Bedienelementpaar zugeordnet sein kann und die Symbole neben oder auf den Bedienelementen des entsprechenden Paares abgebildet sein können. Hierdurch wird die unmittelbare Zuordnung eines bestimmten Bedienelements zu einem bestimmten Parameter sowie zu der Richtung erkennbar, in der der Wert des Parameters durch Betätigung des Bedienelements veränderbar ist.

Besonders vorteilhaft ist es, sprechende Symbole zu verwenden. So kann das Symbolpaar beispielsweise durch Dreiecke oder Pfeile gebildet sein, die unmittelbar auf eine bestimmte Richtung hinweisen, in die ein Parameterwert verändert werden kann.

Vorzugsweise umfasst das Menü die Einstellung derjenigen Betriebsparameter, die bezogen auf den Betrieb des Gerätes, der Anlage oder den Prozess funktional zusammengehören. Die vorliegende Erfindung eignet sich besonders für Betriebsparameter, die häufig verändert werden. So ist es erfindungsgemäß vorgesehen, bei einer Raumheizungstemperaturregelung eine Uhrzeit und eine Temperatur in einem Menü zusammenzufassen, da diese Betriebsparameter für den Betrieb logisch und funktional unmittelbar zusammengehören.

Insbesondere kann der zweite Betriebsparameter eine Zeitangabe sein, die einen Endzeitpunkt eines Zeitbereichs definiert, bis zu dem der aktuelle Wert des ersten Betriebsparameters gültig ist, d.h. im Rahmen der Steuerung bzw. Regelung gehalten werden soll. Der Zeitbereich kennzeichnet sich folglich dadurch aus, dass ein bestimmter aktuell, d.h. gegenwärtig eingestellter Wert des ersten Betriebsparameters bis zu dem durch die Zeitangabe definierten Zeitpunkt anliegt. Der zweite Betriebsparameter ist in diesem Falle folglich eine in der Zukunft liegende Zeitangabe, wohingegen der erste Betriebsparameter einen zum gegenwärtigen Zeitpunkt eingestellten Temperaturwert repräsentiert, der zumindest bis zu der Zeitangabe gültig ist. Damit gibt der Zeitbereich an, bis zu welcher Uhrzeit eine eingestellte Temperatur gehalten werden soll.

Der Zeitbereich kann temporär oder dauerhaft verändert werden. D.h., dass eine Änderung der Zeitangabe und/ oder eine Änderung des aktuellen Wertes des zweiten Betriebsparameters, der diesem Zeitbereich zugeordnet ist, für den aktuellen Tag oder für jeden Tag der Woche gültig sein kann. Hierzu kann eine entsprechende Einstellung in dem Steuerprogramm vorgenommen werden.

Besonders vorteilhaft ist es des Weiteren, wenn die Bedienungseinheit als Fernbedienungseinheit ausgebildet ist. Die Bedienungseinheit kann hierzu beispielsweise für eine Raummontage an einer Wand vorgesehen sein und das Gerät, die Anlage oder den Prozess über eine Kabel- oder Funkverbindung von zentraler und für den Anwender gut zugänglicher Stelle steuern.

Vorzugsweise ist die Bedienungseinheit ein elektronisches Raumthermostat für eine Raumtemperaturregelung einer Heizungsanlage oder Klimaanlage. Dabei kann ein Temperaturfühler zur Erfassung der Raumtemperatur und/ oder eine Regelungseinheit zur Regelung der Raumtemperatur entweder in dem Raumthermostat integriert sein, vorzugsweise jedoch außerhalb des Raumthermostats, d.h. dezentral angeordnet sein. In letzterem Fall übernimmt eine zentrale Regelungseinheit die Raumtemperaturregelung, wobei das Raumthermostat lediglich die Eingabe und/ oder Änderung von Betriebsparametern und weiteren Einstellungen durch den Anwender ermöglicht.

Derartige Bedienungseinheiten werden überwiegend von Nichtfachleuten bedient und haben daher den Anspruch, eine besonders einfache, verständliche und intuitive Bedienung der Heizparameter aufzuweisen. Durch das gleichzeitige Anzeigen der durch den Anwender veränderbaren Parameterwerte für Temperatur und Zeit auf einer Bedienungseinheit, die logisch und funktional zusammengehören und die jeweils mittels den Richtungstasten hoch/runter im Falle der Temperatur und rechts/links im Falle der Zeitangabe verändert werden können, wird diesem Anspruch genügt. Das Bedienkonzept einer derartigen Bedienungseinheit ist dadurch besonders einfach und gewährleistet aufgrund der Übersicht über die einzustellenden Parameter ein Hohes Maß an Sicherheit vor Fehleinstellungen.

Weitere Merkmale und Vorteile der Erfindung sind in der nachfolgenden Beschreibung von Ausführungsbeispielen anhand der Figuren erläutert. Dabei zeigen:
- Fig. 1:: eine erste Ausführungsvariante einer Fernbedienungseinheit mit zwei einstellbaren Parametern und mechanisch unabhängigen Navigationstasten
- Fig. 2:: eine zweite Ausführungsvariante einer Fernbedienungseinheit mit zwei einstellbaren Parametern und rundem 4-Punkt Navigationsbedienelement
- Fig. 3:: eine dritte Ausführungsvariante einer Fernbedienungseinheit mit zwei einstellbaren Parametern und kreuzförmigem 4-Punkt Navigationsbedienelement
- Fig. 4:: eine vierte Ausführungsvariante einer Fernbedienungseinheit mit vier einstellbaren Parametern und kombiniertem rund/ kreuz- 8 Punkt Navigationsbedienelement
- Fig. 5:: Raumtemperatur-Zeit-Diagramm zur Darstellung eines vorbestimmten zeitlichen Verlaufs der Raumtemperatur.

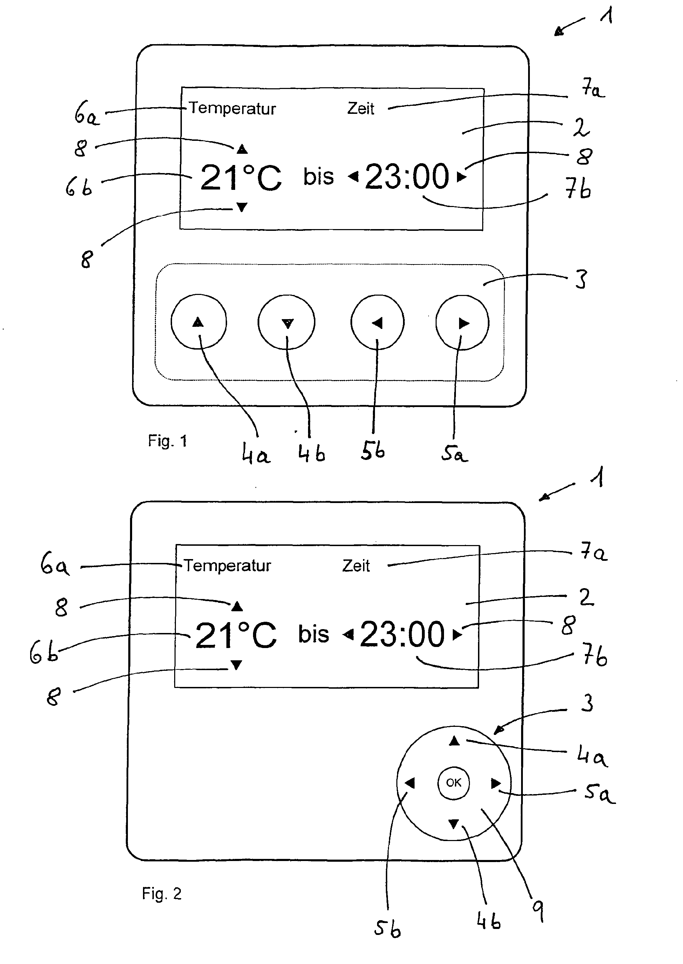

Figur 1 zeigt eine Fernbedienungseinheit 1 zur Bedienung einer Raumheizungsregelung. Es weist ein Display 2 und eine Bedienanordnung 3 umfassend vier Bedienelemente 4a, 4b, 5a, 5b auf. Weiterhin umfasst die Fernbedienungseinheit 1 einen nicht dargestellten Speicher, in dem ein parametrierbares Steuerprogramm gespeichert ist, und einen nicht dargestellten Mikroprozessor zur Ausführung des Steuerprogramms. Das Steuerprogramm hat ein Menü bzw. Untermenü, in dem zwei Betriebsparameter 6a, 7a einstellbar sind, deren aktuelle Werte 6b, 7b auf dem Display 2 zeitgleich angezeigt sind. Neben den Parameterwerten 6b, 7b sind auch die Parameter 6a, 7a selbst namentlich auf dem Display 2 wiedergegeben. Dabei handelt es sich um eine Temperatur 6a als ersten Betriebsparameter und eine Zeitangabe 7a als zweiten Betriebsparameter, wobei der Zeitangabe 7a der Wert 23:00 Uhr und der Temperatur 6a der Wert 21 °C zugeordnet ist. Dies gibt an, dass bis 23:00 Uhr auf eine Raumtemperatur von 21°C geregelt werden soll. Die Parameter 6a, 7a gehören daher bezogen auf die Raumheizungsregelung logisch und funktional zusammen. Sie definieren einen Zeitbereich innerhalb eines Temperaturprofils.

Dem ersten Betriebsparameter 6a "Temperatur" ist ein erstes Bedienelementpaar 4a, 4b, dem zweiten Betriebsparameter 7a "Uhrzeit" ein zweites Bedienelementpaar 5a, 5b zugeordnet, die jeweils zwei Bedienelemente umfassen. Jedem Bedienelement 4a, 4b, 5a, 5b ist eine Richtungsangabe bzw. Richtungswirkung zugeordnet, mit der ein Parameter 6a, 7a in eine bestimmte Richtung verändert werden kann. Mittels des einen Bedienelements 4a des ersten Bedienelementpaares 4a, 4b kann der Wert 6b des ersten Betriebsparameters 6a in eine erste Richtung, hier nach oben, und mittels des anderen Bedienelements 4b des ersten Bedienelementpaares 4a, 4b in die entgegengesetzte Richtung, hier nach unten, verändert werden. Weiterhin kann mittels des einen Bedienelements 5a des zweiten Bedienelementpaares 5a, 5b der Wert 7b des zweiten Betriebsparameters 7a in eine erste Richtung, hier nach oben, und mittels des anderen Bedienelements 5b des zweiten Bedienelementpaares 5a, 5b in die entgegengesetzte Richtung, hier nach unten verändert werden.

Die Bedienelemente 4a, 4b, 5a, 5b gemäß Figur 1sind als Drucktaster ausgebildet und mechanisch unabhängig von einander, nebeneinander in einer Reihe angeordnet. Aufgrund ihrer Funktion, die Parameterwerte 6b, 7b in eine bestimmte Richtung zu verändern, stellen sie Richtungstasten dar, die auch Navigationstasten genannt werden können.

Jedem Parameterwert 6b, 7b ist ein Symbolpaar 8 in Form von Dreiecken zugeordnet, wobei das Symbolpaar 8 auf dem Display 2 neben dem entsprechenden Parameterwert 6b, 7b angezeigt ist. Bei dem ersten Betriebsparameter 6a "Temperatur" ist ein Symbolpaar 8 oben und unten neben dem numerischen Parameterwert 6b dargestellt, bei dem zweiten Betriebsparameter 7a 'Zeit' ist ein Symbolpaar 8 rechts- und linksseitig des numerischen Parameterwerts 7b gezeigt. Zusätzlich sind die Symbolpaare 8 ebenfalls jeweils einem Bedienelementpaar [4a, 4b], [5a, 5b] zugeordnet. Die Dreiecke 8 sind auf den Bedienelementen 4a, 4b, 5a, 5b aufgebracht. Auf diese Weise kann unmittelbar erkannt werden, dass mit dem Bedienelement 4a die Temperatur erhöht, mit dem Bedienelement 4b die Temperatur reduziert, mit dem Bedienelement 5a die Uhrzeit erhöht und mit dem Bedienelement 5b die Uhrzeit reduziert werden kann.

Figur 2 zeigt eine alternative Ausführungsvariante der Bedienanordnung 3. Die Bedienelemente 4a, 4b, 5a, 5b sind über eine gemeinsame Bedienfläche in Gestalt einer Kreisscheibe miteinander verbunden, die ein Navigationsbedienteil 9 bildet. Das Navigationsbedienteil weist einen zentralen Druckknopf mit der Aufschrift ,OK` auf, mittels welcher eine vorgenommene Eingabe bestätigt werden kann, so dass das Steuerprogramm auf den neuen Werte steuert bzw. regelt. Die Bedienfläche des Navigationsbedienteils 9 ist in vier Richtungen kippbar, d.h. nach rechts, links, oben und unten. Jedes Bedienelement 4a, 4b, 5a, 5b bildet einen Teil des Navigationsbedienteils 9 entsprechend der möglichen Kipprichtung desselben. Unterhalb der Bedienfläche weist das Navigationsbedienteil 9 Drucktaster auf, die durch Kippen in eine Richtung betätigt werden.

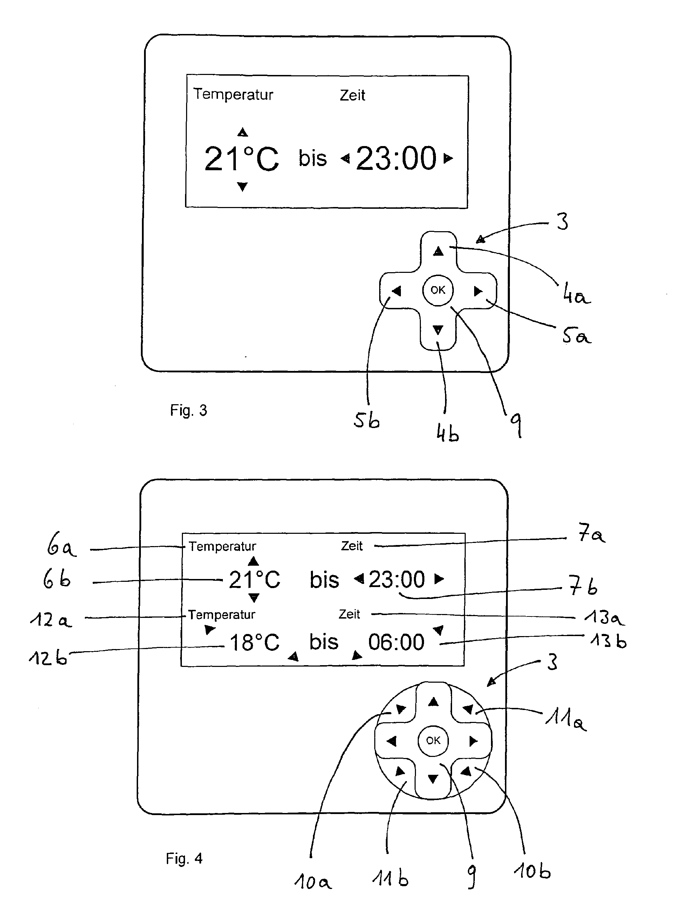

Figur 3 zeigt eine alternative Ausführungsvariante des Navigationsbedienteils 9. In dieser Ausführungsform weist die gemeinsame Bedienfläche des Navigationsbedienteils 9 eine Kreuzform auf.

Figur 4 zeigt eine alternative Ausführungsform einer Fernbedieneinheit 1, bei der in einem einzigen Menü vier Betriebsparameter 6a, 7a, 12a, 13a gleichzeitig einstellbar sind. Deren aktuelle Werte 6b, 7b, 12b, 13b sind auf dem Display 2 zeitgleich dargestellt. Jedem Betriebsparameter 6a, 7a, 12a, 13a ist auch hier ein Bedienelementpaar [4a, 4b], [5a, 5b], [10a, 10b], [11a, 11b] zugeordnet. Aus Übersichtsgründen sind die Bezugsziffern 4a, 4b, 5a, 5b nicht dargestellt. Sie entsprechen den Angaben in Figur 2.

Jedes Bedienelementpaar [4a, 4b], [5a, 5b], [10a, 10b], [11a, 11b] umfasst ein erstes Bedienelement 4a, 5a, 10a, 11a, mit dem der Wert 6b, 7b, 12b, 13b des jeweiligen Betriebsparameters 6a, 7a, 12a, 13a in eine erste Richtung, d.h. nach oben verändert werden kann. Weiterhin umfasst jedes Bedienelementpaar [4a, 4b], [5a, 5b], [10a, 10b], [11a, 11b] ein zweites Bedienelement 4b, 5b, 10b, 11b, mit dem der Wert 6b, 7b, 12b, 13b des jeweiligen Betriebsparameters 6a, 7a, 12a, 13a in die entgegengesetzte Richtung, d.h. nach unten verändert werden kann. Auch in dieser Ausführungsvariante sind den Parameterwerten 6b, 7b, 10b, 11 b und den Bedienelementen 4a, 4b, 5a, 5b, 10a, 10b, 11a, 11 b jeweils Symbole 8 in Gestalt von Dreiecken zugeordnet, die zu Erkennen geben, mittels welchem Bedienelement 4a, 4b, 5a, 5b, 10a, 10b, 11 a, 11 b, welcher Parameterwert 6b, 7b, 10b, 11 b in welche Richtung verändert werden kann.

Das Navigationsbedienteil 9 gemäß Figur 4 weist acht drucksensitive Bereiche auf, die entlang seines Umfangs ausgebildet sind, so dass Druckbereiche entstehen, denen die folgenden Richtungen zugeordnet werden können: Nord, Nordost, Ost, Südost, Süd, Südwest, West und Nordwest. Das Navigationsbedienteil 9 stellt eine Kombination der Bedienteile 9 aus Figur 2 und Figur 3 dar, wobei das Bedienteil 9 aus Figur 2 um 45° gedreht ist. Die Bedienelemente 10a, 10b, 11 a, 11 b können einstückig mit der kreuzförmigen Bedienfläche ausgebildet sein, alternativ durch mechanisch von dieser unabhängige Drucktaster gebildet sein.

Die Fernbedieneinheit 1 nach den in den Figuren 1 bis 4 gezeigten Ausführungsvarianten ist für eine hängende Wandmontage vorgesehen, so dass sie als Raumthermostat für eine Raumtemperaturregelung bei einer Heizungsanlage eingesetzt werden kann. Ein Temperaturmessfühler und eine Regelungseinheit für die Raumtemperatur sind jedoch nicht in dem Thermostat integriert. Die Regelung wird vielmehr von einer zentralen Einheit, die die Heizungsanlage und die in dem Raum vorhandenen Heizkörper, respektive Stellventile oder dezentrale Pumpen der Heizkörper regelt, vorgenommen. Die zentrale Einheit ist über einen Bus mit der Bedieneinheit verbunden.

Figur 5 zeigt ein Raumtemperatur-Zeit-Diagramm, nachfolgend Temperaturprofil genannt, in dem ein vorbestimmter Verlauf der Raumtemperatur dargestellt ist. Auf der x-Achse (Abszisse) ist die Zeit, auf der y-Achse (Ordinate) die Temperatur aufgetragen. Das Temperaturprofil besteht aus vier Zeitbereichen 14. Ein Zeitbereich 14 umfasst einen Startzeitpunkt und einen Endzeitpunkt in Gestalt einer Uhrzeit im 24h-Format und eine Temperatur. Der Startzeitpunkt liegt dabei stets vor dem Endzeitpunkt. Das Temperaturprofil gibt an, dass für die Zeit zwischen 00:00 Uhr und 06:00 Uhr auf eine Temperatur von 18°C, zwischen 06:00 Uhr und 09:00 Uhr auf eine Temperatur von 20°C, zwischen 09:00 Uhr und 18:00 Uhr wieder auf eine Temperatur von 18°C, zwischen 18:00 Uhr und 23:00 Uhr auf eine Temperatur von 21°C und zwischen 23:00 Uhr und 24:00 Uhr wieder auf eine Temperatur von 18°C geregelt werden soll, bzw. geregelt wird. Das Temperaturprofil weist deshalb prinzipbedingt eine Rechteckstruktur auf.

Ein erster Zeitbereich 14 von 00:00 Uhr bis 06:00 Uhr und ein zweiter Zeitbereich 15 von 18:00 bis 23:00 Uhr sind jeweils durch ein gestricheltes Rechteck in Figur 5 besonders hervorgehoben. Die Temperatur und der Endzeitpunkt des zweiten Zeitbereichs 14 entsprechen den Werten, die auf dem Display 2 der Bedieneinheit 1 in den Figuren 1 bis 3, sowie in Figur 4 in der oberen Parameterwertzeile wiedergegeben sind. Die Temperatur und der Endzeitpunkt des ersten Zeitbereichs 14 entsprechen den Werten, die auf dem Display 2 der Bedieneinheit 1 in Figur 4 in der unteren Parameterwertzeile wiedergegeben sind. Dies veranschaulicht, dass in Figur 4 die obere Parameterzeile des Displays 2 den aktuellen Zeitbereich und die untere Parameterzeile den nächstfolgenden Zeitbereich wiedergeben.

Für die Vorgabe einer zum jetzigen Zeitpunkt gewünschten Solltemperatur für den aktuellen Zeitbereich ist es notwendig, den Temperaturwert innerhalb des entsprechenden Zeitbereichs nach oben oder unten zu verschieben. Weiterhin wird eine Änderung des Endzeitpunktes des aktuellen Zeitbereichs dadurch bewirkt, dass die rechte Flanke des aktuellen Zeitbereichs 14 des Temperaturprofils nach rechts oder links verschoben wird. Pfeile zeigen in Figur 5 die genannten Verschiebungsrichtungen der Kurvenabschnitte an. Es ist daher zur Erreichung einer besonders intuitiven Bedienung der Bedieneinheit 1 vorteilhaft, dem ersten Parameter 6a "Temperatur" die Änderungsrichtungen hoch/ runter und dem zweiten Parameter 7a "Uhrzeit" die Änderungsrichtungen rechts/ links zuzuordnen, entsprechend der Richtung, in die der zugehörige Kurvenabschnitt verschoben werden kann. Die neben den Parameterwerten 6b, 7b auf dem Display 2 und auf den Bedienelementen 4a, 4b, 5a, 5b dargestellten Symbole 8 zeigen die Richtungszuordnungen an.

## Patentansprüche

1. Bedienungseinheit (1) zur Bedienung einer Steuerung eines Gerätes, einer Anlage und/ oder Prozesses in der Gebäudeautomation, mit einem Display (2), einer Bedienanordnung (3) umfassend mindestens vier Bedienelemente (4a, 4b, 5a, 5b), einem Speicher, in dem ein parametrierbares Steuerprogramm gespeichert ist, und einem Mikroprozessor zur Ausführung des Steuerprogramms, wobei das Steuerprogramm zumindest ein Menü aufweist, in welchem dem Steuerprogramm mittels der Bedienelemente (4a, 4b, 5a, 5b) ein auf dem Display (2) dargestellter Wert (6b, 7b) für einen Betriebsparameter (6a, 7a) vorgebbar ist, und in dem Menü mindestens zwei Betriebsparameter (6a, 7a) einstellbar sind, deren aktuelle Werte (6b, 7b) auf der Bedienungseinheit (1) gleichzeitig dargestellt sind, wobei jedem Parameter (6a, 7a) ein Bedienelementpaar ((4a, 4b); (5a, 5b)) zugeordnet ist, und wobei mittels des einen Bedienelements (4a) des ersten Bedienelementpaares (4a, 4b) der Wert (6b) des ersten Betriebsparameters (6a) in eine erste Richtung und mittels des anderen Bedienelements (4b) des ersten Bedienelementpaares (4a, 4b) in die entgegengesetzte Richtung verändert werden kann, und mittels des einen Bedienelements (5a) des zweiten Bedienelementpaares (5a, 5b) der Wert (7b) des zweiten Betriebsparameters (7a) in eine erste Richtung und mittels des anderen Bedienelements (5b) des zweiten Bedienelementpaares (5a, 5b) in die entgegengesetzte Richtung verändert werden kann, **dadurch gekennzeichnet, dass** der erste Betriebsparameter (6a) eine Temperaturangabe und der zweite Betriebsparameter (7a) eine Zeitangabe ist, und dem ersten Bedienelementpaar (4a, 4b) die Richtungen "hoch" und "runter" und dem zweiten Bedienelementpaar (5a, 5b) die Richtungen "rechts" und "links" zugeordnet sind.

2. Bedienungseinheit (1) Anspruch 1, **dadurch gekennzeichnet, dass** in dem Menü drei oder vier Betriebsparameter (6a, 7a, 12a, 13a) einstellbar sind, deren aktuelle Werte (6b, 7b, 12b, 13b) auf der Bedienungseinheit (1) gleichzeitig dargestellt sind, wobei jedem Betriebsparameter (6a, 7a, 12a, 13a) ein Bedienelementpaar ((4a, 4b); (5a, 5b); (10a, 10b); (11a, 11b)) zugeordnet ist und jedes Bedienelementpaar ((4a, 4b); (5a, 5b); (10a, 10b); (11a, 11b)) ein erstes Bedienelement (4a, 5a, 10a, 11a) umfasst, mit dem der Wert (6b, 7b, 12b, 13b) des jeweiligen Betriebsparameters (6a, 7a, 12a, 13a) in eine erste Richtung verändert werden kann, und jedes Bedienelementpaar ((4a, 4b); (5a, 5b); (10a, 10b); (11a, 11b)) ein zweites Bedienelement (4a, 5a, 10a, 11a) umfasst, mit dem der Wert (6b, 7b, 12b, 13b) des jeweiligen Betriebsparameters (6a, 7a, 12a, 13a) in die entgegengesetzte Richtung verändert werden kann.

3. Bedienungseinheit (1) nach einem der vorherigen Ansprüche, **dadurch gekennzeichnet, dass** die Bedienelemente (4a, 4b, 5a, 5b, 10a, 10b, 11a, 11 b) als Navigationstasten ausgebildet sind, wobei jedem Bedienelement eine Richtung zugeordnet ist.

4. Bedienungseinheit (1) nach einem der vorherigen Ansprüche, **dadurch gekennzeichnet, dass** sich die ein Bedienelementpaar ((4a, 4b); (5a, 5b); (10a, 10b); (11a, 11b)) bildenden Bedienelemente (4a, 4b, 5a, 5b, 10a, 10b, 11a, 11 b) gegenüber liegen.

5. Bedienungseinheit (1) nach einem der vorherigen Ansprüche, **dadurch gekennzeichnet, dass** jedem Parameterwert (6b, 7b, 12b, 13b) ein Symbolpaar (8) umfassend zwei Symbole (8) zugeordnet ist, die neben dem Parameterwert (6b, 7b, 12b, 13b) angezeigt sind, wobei die Symbolpaare (8) ebenfalls jeweils einem Bedienelementpaar ((4a, 4b); (5a, 5b); (10a, 10b); (11 a, 11b)) zugeordnet sind und die Symbole (8) neben oder auf den Bedienelementen (4a, 4b, 5a, 5b, 10a, 10b, 11a, 11 b) abgebildet sind.

6. Bedienungseinheit (1) nach Anspruch 5, **dadurch gekennzeichnet, dass** die Symbole (8) durch Dreiecke oder Pfeile gebildet sind.

7. Bedienungseinheit (1) nach einem der vorherigen Ansprüche, **dadurch gekennzeichnet, dass** die Zeitangabe einen Endzeitpunkt eines Zeitbereichs (14) definiert, bis zu dem der aktuelle Wert (6b) der Temperaturangabe mindestens gültig ist.

8. Bedienungseinheit (1) nach Anspruch 7, **dadurch gekennzeichnet, dass** der Zeitbereich (14) temporär oder dauerhaft veränderbar ist.

9. Bedienungseinheit (1) nach einem der vorherigen Ansprüche, **dadurch gekennzeichnet, dass** die Betriebsparameterwerte (6b, 7b, 12b, 13b) als numerische Zahlenwerte, binäre Werte, als Textangaben und/ oder als grafische Darstellungen auf der Bedieneinheit (1) angezeigt sind.

10. Bedienungseinheit (1) nach einem der vorherigen Ansprüche, **dadurch gekennzeichnet, dass** sie eine Fernbedienungseinheit (1) ist.

11. Bedienungseinheit (1) nach einem der vorherigen Ansprüche, **dadurch gekennzeichnet, dass** sie ein elektronisches Raumthermostat für eine Raumtemperaturregelung einer Heizungsanlage ist.

12. Verfahren nach einem der vorherigen Ansprüche, **dadurch gekennzeichnet, dass** die Bedienelemente (4a, 4b, 5a, 5b, 10a, 10b, 11a, 11 b) entfernt von der Darstellung der Betriebsparameter (6a, 7a, 12a, 13a) auf dem Display (2) angeordnet sind.

13. Verfahren nach einem der vorherigen Ansprüche, **dadurch gekennzeichnet, dass** die Bedienelemente (4a, 4b, 5a, 5b) über eine gemeinsame Bedienfläche miteinander zu einem Navigationsbedienteil (9) verbunden sind.

14. Verwendung einer Bedienungseinheit (1) nach einem der Ansprüche 1 bis 13 zur Steuerung einer Heizungsanlage in der Gebäudeautomation.
